# EUROPEAN PATENT APPLICATION

(11) **EP 2 940 605 A1**
(43) Date of publication of application: **04.11.2015**
(21) Application number: 15165887.9
(22) Date of filing: 30.04.2015
(51) Int. Cl.: G06F 17/30

(54) **INFORMATION SEARCH SYSTEM AND METHOD**

(30) Priority: 02.05.2014 KR 20140053591
(71) Applicant: Samsung Electronics Co., Ltd, Gyeonggi-do 443-742 (KR)
(72) Inventor: ROH, Yo Han, Gyeonggi-do (KR); JEON, Joo Hyuk, Gyeonggi-do (KR); HONG, Seok Jin, Gyeonggi-do (KR); WOO, Kyoung Gu, Seoul (KR); YOO, Sang Hyun, Seoul (KR); LEE, Ji Hyun, Gyeonggi-do (KR); LEE, Ho Dong, Gyeonggi-do (KR)
(74) Representative: Grünecker Patent- und Rechtsanwälte PartG mbB

(57) **Abstract**

An information search apparatus includes an event receiver configured to receive an event from an application interface, wherein the application interface is presented on a display of the information search apparatus; a query extractor configured to, in response to receiving the event, extract a query from content displayed within the application interface; an information searcher configured to search for information from an information source using the query; and an information layer display configured to display an information layer within the application interface such that the information layer overlies existing objects on the application interface, wherein the information layer includes an information item which indicates information found by the search for information.

## Description

### 1. Field

The following description relates to information search technology to search for information from information sources using a query and to provide the search result to a user.

### 2. Description of Related Art

Generally, a mobile computing device, such as a smartphone, a tablet personal computer (PC), and the like, is convenient to carry. However, the mobile computing device has a smaller display than a traditional desktop computing device, and the mobile computing device does not support a multi-window interface. Thus, for example, when a user needs to search for information from an external information source, while inputting text for document creation or message creation, the user may need to terminate or leave a currently running application and execute an application dedicated to searching for external information. This process of terminating or leaving a currently running application and executing another application may be inconvenient or troublesome to the user.

In addition, a laptop computer or a desktop computer, which is equipped with a large-scale display and employs a multi-window type user interface, is convenient for simultaneously creating a relatively large number of windows. However, to search for needed information while creating a document, the user may need to leave the currently running window and move to another window in which a different document or a different application is running. Then, after searching for information, the user needs to return to the initially operated window, which may also be inconvenient to the user.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, there is provided an information search apparatus including: an event receiver configured to receive an event from an application interface, wherein the application interface is presented on a display of the information search apparatus; a query extractor configured to, in response to receiving the event, extract a query from content displayed within the application interface; an information searcher configured to search for information from an information source using the query; and an information layer display configured to display an information layer within the application interface such that the information layer overlies existing objects on the application interface, wherein the information layer comprises an information item which indicates information found by the search for information.

In another general aspect, there is provided an information search method including: receiving an event from an application interface, wherein the application interface is presented on a display of a computing device; in response to receiving the event, extracting a query from content displayed within the application interface; searching for information from an information source using the query; and displaying an information layer within the application interface such that the information layer overlies existing objects on the application interface, wherein the information layer comprises an information item which indicates information found by the searching for information.

Other features and aspects will be apparent from the following detailed description, the drawings, and the claims.

### BRIEF DESCRIPTION OF THE DRAWINGS

FIG. 1 is a diagram illustrating an example of an application interface.
FIG. 2 is a diagram illustrating an example of an information search system.
FIG. 3 is a diagram illustrating an example of the information layer provided in accordance with the example of FIG. 2.
FIG. 4 is a diagram illustrating another example of an information layer provided in accordance with the example of FIG. 2.
FIG. 5 is a block diagram illustrating another example of the information search system.
FIG. 6 is a diagram illustrating an example of a method of a user to manually choose a query according to the example illustrated in FIG. 5.
FIG. 7 is a block diagram illustrating another example of the information search system.
FIG. 8 is a block diagram illustrating another example of the information search system.
FIG. 9 is a diagram illustrating an example of an event for inputting an information item to an information layer in accordance with the example of FIG. 8.
FIG. 10 is a diagram illustrating an example of a result of transmitting the information item in accordance with the example of FIG. 8.
FIG. 11 is a diagram illustrating another example of the information search system.
FIG. 12 is a diagram illustrating an example of an information layer provided in accordance with the example of FIG. 11.
FIG. 13 is a diagram illustrating another example of the information layer provided in accordance with the example of FIG. 11.
FIG. 14 is a diagram illustrating another example of the information layer provided in accordance with the example of FIG. 11.
FIG. 15 is a diagram illustrating another example of the information layer provided in accordance with the example of FIG. 11.
FIG. 16 is a block diagram illustrating another example of the information search system.
FIG. 17 is a diagram illustrating an example of an information source to be registered according to an example of FIG. 16.
FIG. 18 is a flowchart illustrating an example of an information search method.
Fig. 19 is a flowchart illustrating another example of the information search method.
FIG. 20 is a flowchart illustrating another example of the information search method.
FIG. 21 is a flowchart illustrating another example of the information search method.
FIG. 22 is a flowchart illustrating another example of the information search method.
FIG. 23 is a flowchart illustrating another example of the information search method.
FIG. 24 is a flowchart illustrating another example of the information search method.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. For example, the sequences of operations described herein are merely examples, and are not limited to those set forth herein, but may be changed as will be apparent to one of ordinary skill in the art, with the exception of operations necessarily occurring in a certain order. Also, descriptions of well-known functions and constructions may be omitted for increased clarity and conciseness.

With the recent development of computing and communication environment, the amount of information that may be searched and the form how information may be searched by an individual are increasing. Accordingly, the importance to find intended information is increasing. In addition, the places where the information may be searched is being expanded. The search for information includes various well-known mechanisms. For example, a web search is used to search for data in websites, a file search is used to search for data within files in a personal device, such as, a personal computer (PC), and login-based search is used to search for data based on a mail account or community or block account. Thus, a user of a computing device can find desired information by searching local and remote data. The computing device may include for example, a desktop computer, a tablet computer, a smartphone, and the like, and the local and remote data can include, for example, data on webpages open to the public, data on communities within a web server, blogs or personal accounts of social networking services, as well as data within files on the user's computing device. Since the search for desired information includes local and remote data, the computing device may or may not be connected to the Internet. Further, the user may use various search mechanisms, such as keyword-based search, meaning-based search (i.e., semantic search) to find results relevant to the user's situation by logically understanding the contextual meaning of terms or sentences, and the like.

The user may search for necessary information in various situations. For example, the user may search for the necessary information while generating a document with a desktop computer or texting with a smartphone. For example, the user may want to look up a dictionary to find a definition of a specific term, check spelling of a particular foreign word, or find a previous news article. In this case, typically the user may exit a user interface of a current application where the user is inputting text, then search for information of interest through a user interface of another application, for example, a web browser, and then return to the previous application to complete the sentence that the user was inputting. This process can be relatively more inconvenient and labor-intensive, especially to the user of a mobile computing device, since the mobile computing device has a limited display area and may not support multi-window features depending on its operating system (OS).

Generally, the computing device that provides a multi-window environment includes a display. The display of the computing device can display multiple windows, and each window may provide a user interface provided by each application. Here, the "application" refers to software, a program, a module, a procedure, data architecture, etc., as long as the application is installed in the computing device to perform a specific action by being executed by a processor within the computing device.

For simplicity of description, a user interface provided by each application within a display screen (each window in a multi-window environment) of a computing device will be, hereinafter, referred to as an "application interface." The application interface may include a variety of objects to enable interaction between a user and the application. For example, the application interface may include various objects, such as controllers including buttons, and the like, an input format that enables inputting of texts, images, and the like, and a simple display area where the application shows text, and the like, to the user. The controllers enable the user to input a particular instruction.

The application interface may receive different user gestures or events through an input device, such as a keyboard, a mouse, a touch instrument, a microphone, or the like. The input device enables the interaction between the user and the application. In addition, the application interface may provide the user with results of an action performed by the application in response to the user gesture or event.

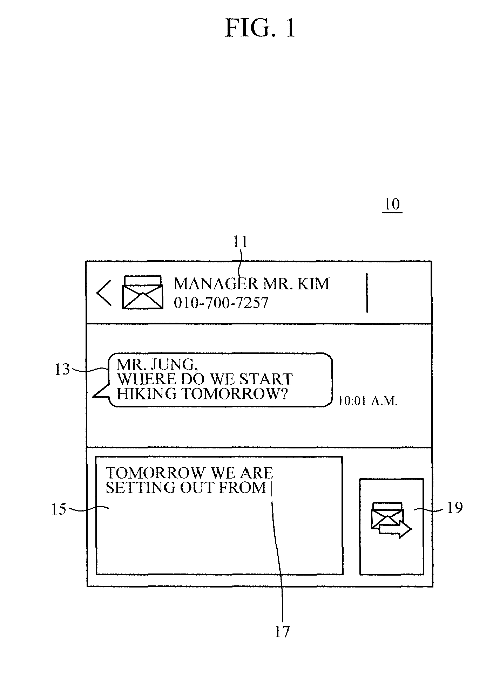

FIG. 1 is a diagram illustrating an example of an application interface.

Referring to FIG. 1, an application interface 10 is a user application of an application that is installed in a smartphone to transmit and receive text messages over a telephone network. The user application enables a user to create a text message and to transmit the message to a recipient.

The application interface 10 includes multiple objects 11, 13, 15, and 19 including: a recipient displaying area 11; a previous message displaying area 13; a message input form 15; and a text message transmission controller area 19. The recipient displaying area 11 may display the recipient's name and phone number for a currently created text message. The previous message displaying area 13 may display a message that has been previously received by the recipient or previously sent to the recipient. In the example, the latest message that has been received by the recipient is displayed. The message input form 15 is an area where the user can input a text message, and generally, the text may be input at a position where a cursor 17 is located. In one example, the cursor is positioned with a keyboard. The controller area 19 displays a control shaped as a button that the user can touch, for example, with a finger for a text message sending instruction. However, it is noted that this is only an example of touching the button and thus the user may use another instrument or device to touch the button. For example, the user may use a stylus or pen

In FIG. 1, the application interface 10 shows that the user is creating a reply within the input form 15. While creating the reply message, for example, the user may remember that needed information is in a previously received email message. In this case, the user may need to take additional steps to retrieve the needed information. For example, the user may need to exit the current application interface 10 with which the user is creating the text message, then running an email application to check the previously received email message, and then returning to the original application interface 10. If the user's computing device is a mobile device that does not support a multi-window feature, the user may need to restart creating a text message since there is no window to which to return.

To avoid such inconvenience, an information search system and method according to an example may provide an information search technology that enables the user of the device to search for intended information without leaving a currently running application interface. Further, the information search system and method provides the search results on layers overlying existing objects within the application interface, rather than providing search results on a new area that is size-competitive with the existing objects.

Regarding the aspect of performing a search process without leaving a current task, a typo-correction mechanism has been known. This typo-correction mechanism provides a plurality of relevant words on a predefined information provision area to enable the user of the device to choose a proper word while the user is inputting text, the relevant words being similar to a currently input word or just a completed word. The information provision area is included in the existing objects in the application interface that the user is currently executing. Thus, the existing objects and the information provision area compete with each other in size for space in the application interface, so that the size of the information provision area is limited.

In contrast, according to the information search technique in accordance with the example, information is provided on a different layer (hereinafter referred to as an "information layer") that overlies the existing objects. As such, in the information search in accordance with the example, the found information is provided within an application interface that is currently run by the user, and on a separate individual layer that overlies the existing objects.

Since the information layer is an object that overlies the existing objects, it does not need to dispose the information layer on the same layer as the existing objects, in order to secure a particular area of a display screen on which the application interface is displayed.

The existing objects of the application interface are implemented as permanent entities relative to the application interface, whereas the information layer can be implemented as a temporary entity that is created when necessary, and then disappears when it is no longer needed.

In accordance with one configuration, the information layer is a translucent layer. Any level of translucency will do, as long as content, such as text, displayed on the existing objects is visibly recognizable by users. Thus, the translucency of the information layer may be variably determined, and the information layer may be further adjusted to any color desired by the user.

Since the information layer is translucent, the user is able to see content of the existing objects beneath the information layer, so that the user can conveniently compare and check the relationship between the information displayed on the information layer and the information displayed on the existing objects.

Various properties including the size, position, shape, as well as the translucency or color of the information layer can be adjusted by the user. Since the information layer overlies the existing objects within the application interface, its size or shape can be determined or adjusted, regardless of the arrangement of the exiting objects. Accordingly, the information layer may not only display the found information, but also have controls to enable the user to adjust the translucency, size, shape, position, and the like of the information layer. The controls may be implemented as, for example, input buttons displayed on the information layer. In addition, the controls may be implemented as predefined gestures, including touching or dragging on the information layer, and the like. For example, in accordance with one configuration, the user may drag an edge of the information layer.

The information to be displayed on the information layer may include information items and source items associated with each information item. In one example, the information items may include text that has been found by a keyword-based search mechanism or a semantic search mechanism. For example, the information item may include text that consists of letters, figures, symbols, or the like, which can represent a keyword, a word, a phrase, etc.

The source item may be represented in association with a particular information item. The source item is an item that shows data that is a source or basis from which a particular information item is found. For example, in one configuration, it is assumed that email data is searched with query "hiking" and the search result shows that an information item "Gangbyeon Station" is found in an "email message received a week ago." In this case, the information item is a text of "Gangbyeon Station" and the source item is an "email application" or the "email message received a week ago" from which the information item is found.

Various user actions, for example, inputting text related to the information item displayed on the information layer, toggling display of a source item associated with the information item, instructing to display other information items, and the like, are available. For example, a user may double tap an information item displayed on the information layer so that the information item is input at a cursor position within an input form with which the user was previously writing a text message just before the information search. The user may control a source item associated with a particular information item to appear or disappear on the information layer by circling the information item with a finger through a touch gesture but is not limited thereto. For example, the user may circle the information item with a stylus or pen or any other suitable object. Also, the user may control a next information item or a previous information item to be displayed by performing a sliding touch gesture that drags with a finger the current information item displayed on the information layer but is not limited thereto. For example, the sliding touch gesture may be performed using a stylus or pen. Similarly, it is possible to perform the sliding touch gesture without contacting the current information item displayed on the information layer by using proximity touch sensors.

Also, in the information search technique according to an example, the query for information search may not be the word currently input or the just completed word, but may be determined from information that has already been displayed on the application interface. For example, the user may determine the query by choosing at least part of text displayed on the application interface. In another method, text displayed on a particular area of the application interface may be automatically determined as a query.

In the information search technique according to an example, a location at which the search is carried out to find intended information, that is, information source, may include various local or remote data sources. For example, the information source may include a data source included in a currently executed application, data sources included in other applications in the same local device that is running the current application, and/or a data source included in a remote device that can be connected over a communication network. Any local or remote information source may be used as long as the information source can provide data that may include information of interest to the user. For example, the information source may include, but is not limited to, address book data, email data, schedule data, memo file data, document files, photo-album data, image files, video files, social network service (SNS), websites, data server in a remote server, and the like. The information source may be previously set, and the user may delete or change the previously set information source or add new information source. The search priority may be set to determine the order of information sources to be searched first.

As such, the information search techniques according to the examples may automatically search for relevant information from various information sources based on the information displayed on the application interface, and provide the found information on a translucent layer that overlies the existing objects within the application interface. Accordingly, the user may be allowed to search for information of interest without being distracted from the current operation, and use the found information for the current task.

Furthermore, the information search technology according to an example may be implemented as a lower procedure that is subordinated to one particular application, or may be implemented as an independent application that is not subordinated to a particular application.

Examples of an information search system and method will be described with reference to drawings.

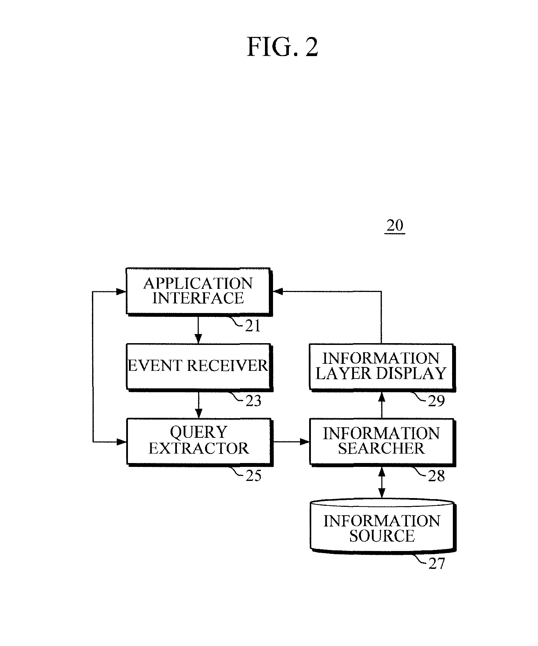

Hereinafter, examples of the information search system will be described with reference to FIGS. 2 to 17. The information search systems described with reference to FIGS. 2 to 17 are only provided for purpose of examples. It will be understood by those skilled in the art that various changes in form and details may be made therein without departing from the scope of the invention as defined by the appended claims. Components of the information search system may each be implemented via hardware that includes circuits that implement individual functions. In addition, the components of the information search system may be implemented by the combination of computer-executable software, firmware and hardware, which enables the execution of a particular task in response to being executed by a processor of a computing device.

FIG. 2 is a diagram illustrating an example of an information search system.

Referring to FIG. 2, an information search system 20 implemented as a subordinate system to a specific application is provided.

In accordance with one configuration, the information search system 20 includes components, such as an application interface 21, an event receiver 23, a query extractor 25, information source 27, an information searcher 28, and an information layer display 29.

The application interface 21 is a user interface that is provided by an application for mutual interaction between a user and the application, which is installed in a computing device, such as a smartphone, to execute a specific function. However, the user may feel a need to search for information while inputting text through the application interface 21.

In this case, the user takes an action for causing a predetermined event to occur to initiate an operation of the information search system 20. For example, the user may touch a button implemented on the application interface 21 to activate an information search function. The user may input a quick double tap at a cursor position at which the text is input. Then, the event receiver 23 receives an event for executing an information search function through the application interface 21.

In response to the event receiver 23 receiving the event for executing the information search function, the query extractor 25 extracts a query from content displayed within the application interface 21. In the case of the application interface 10 as shown in FIG. 1, the query extractor 25 extracts the entire message displayed within a particular object, such as a previous message displaying area 13, as a query.

The information searcher 28 performs a search using the extracted query. The information searcher 28 may search the information source 27 using a general keyword-based search mechanism or a semantic relevance-based search mechanism. The information source 27 may include data produced by the application that offers the application interface 27, data collected through a communication network, and the like.

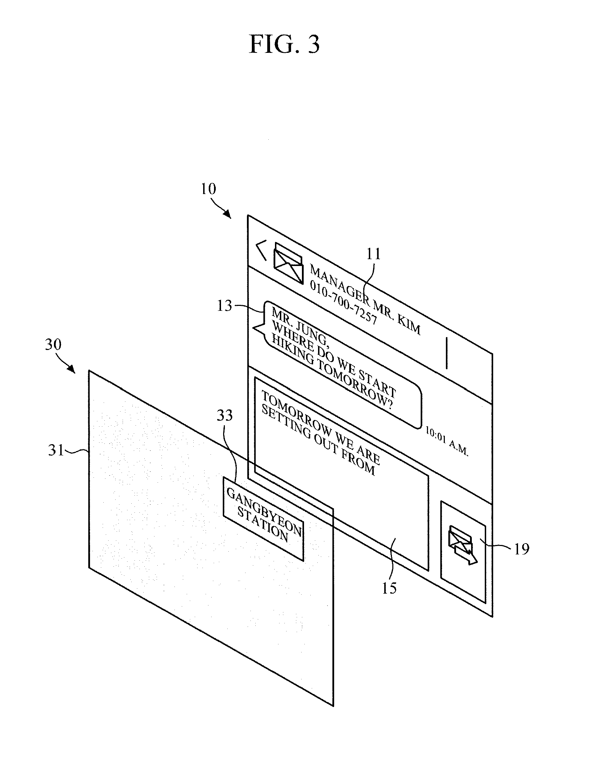

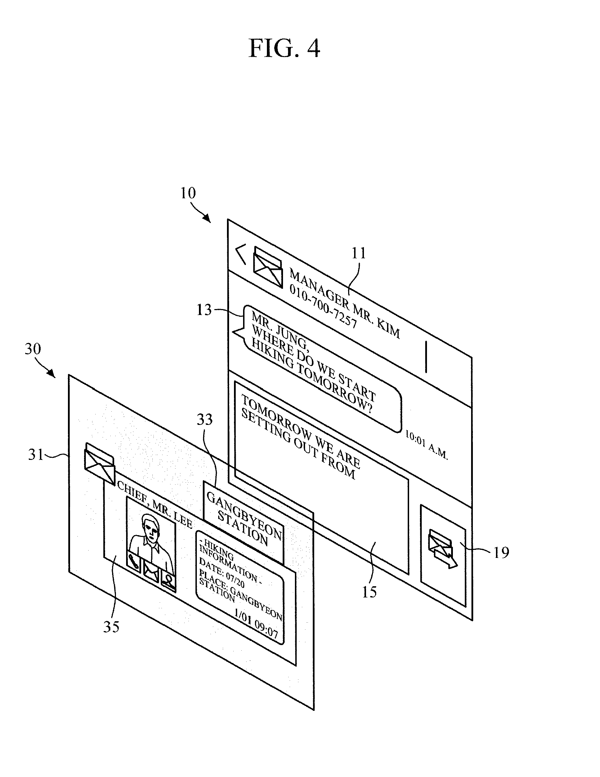

The information layer display 29 generates an information layer and displays the information layer within the application interface 21. The information layer is an additional layer that overlies the existing objects in the application interface 21, which will be further described with reference to FIG. 3 and FIG. 4. The information layer may include an information item in text form that indicates information found by the information searcher 28.

For example, when a user needs to look up a meaning of a particular word in a dictionary while writing a document, or to search for specific information from an email message, the user may double click a text input position with a mouse or double-tap on the text input position with the user's finger. Then, the information search system 20 shown in FIG. 2 may extract a query, search the information source for the information of interest, and display an information layer, which includes an information item that represents a search result. The information layer may overlay at a current text input position on the application interface with which the user is currently writing a document. Then, in one example, after a predetermined lapse of time, the information layer may disappear. Alternatively, the information layer may disappear in response to user input generated by touching a particular position within the application interface or on the information layer.

As such, the information search system 20 in accordance with an example may allow relevant information of the information currently displayed on a screen to be automatically searched by a user's simple touch gesture, without requiring the user to leave the current screen on which a task is running, and may provide the search result on an additional layer.

FIG. 3 is a diagram illustrating an example of the information layer provided in accordance with the example of FIG. 2.

Referring to FIG. 3, examples of the objects 11, 13, 15, and 19 of the application interface 10 described with reference to FIG. 1 and an example of the information layer 30 described with reference to FIG. 2 are provided.

In accordance with one configuration, the information layer 30 is represented as one object within the application interface 10. In other words, the information layer 30 is an object that overlies the previously existing objects 11, 13, 15, and 19 within the application interface 10. As illustrated in FIG. 3, the information layer 30 includes a translucent base layer 31 and an information item 33 displayed on the base layer 31.

The information layer 30 is generated and displayed in response to a user input generated by a finger double touching a cursor position within a text message input form 15 in the application interface 10 while the user is creating a message, in which the cursor position indicates the text input position.

The transparency, size, location, shape and so forth of the information layer 30 may be adjusted by the user. Alternatively, the properties of the information layer 30 may be automatically adjusted depending on various conditions, such as surrounding light. For example, the user may double touch the left corner of the base layer 31 to open the menu for adjusting the transparency of the information layer 30. Alternatively, the user may switch a mode of the base layer 31 to another mode that allows for change of the position of the base layer 31 by pressing the right edge of the base layer 31 with a finger, and move the base layer 31 to a desired position by sliding a finger over the screen. In addition, the user may open the menu to select the shape of the base layer 31 from templates with various shapes, such as a rectangle, a circle, an oval, or the like. In a similar manner, the transparency, size, shape and position of the information item 33 may be changed.

In the example illustrated in FIG. 3, the information item 33 is a keyword of text "Gangbyeon station," but the information item is not limited to text composed of letters only. For example, the information item may include text that is composed of letters, numbers, symbols, or the combination thereof. In addition, the text included in the information item may include elements in image form, such as emoticons, thumbnail images, and the so forth. Further, the text included in the information item may include a control that activates an action that can be executed by a particular gesture (for example, touch input to draw a circle). For example, an information item that relates to a particular Internet address may include an action control to run a web browser for opening a webpage of the particular Internet address in response to input of a specific gesture.

FIG. 4 is a diagram illustrating another example of an information layer provided in accordance with the example of FIG. 2.

Referring to FIG. 4, examples of the objects 11, 13, 15, and 19 of the application interface 10 described with reference to FIG. 1 and an example of the information layer 30 described with reference to FIG. 2 are provided.

The information layer 30 is similar to that illustrated in FIG. 3. In FIG. 4, the information layer 30 includes an translucent base layer 31, an information item 33 displayed on the base layer 31, and a source item 35 indicating source information of the information item 33.

The source item 35 may indicate a source from which the information item 33 is found. Referring to FIG. 4, the source item 35 indicates that the information item 33 is found in a previously received email message.

The source item 35 allows the information item 33 to appear or disappear on the base layer 31 in response to a user's touch input that draws a circle on the information item 33. The translucency, size, position, shape, and the like of the source item 35 may be adjusted manually by the user in a similar way to the information layer 30. Alternatively, the translucency, size, position, shape, and the like of the source item 35 may be automatically adjusted based on environmental conditions where the device is being used.

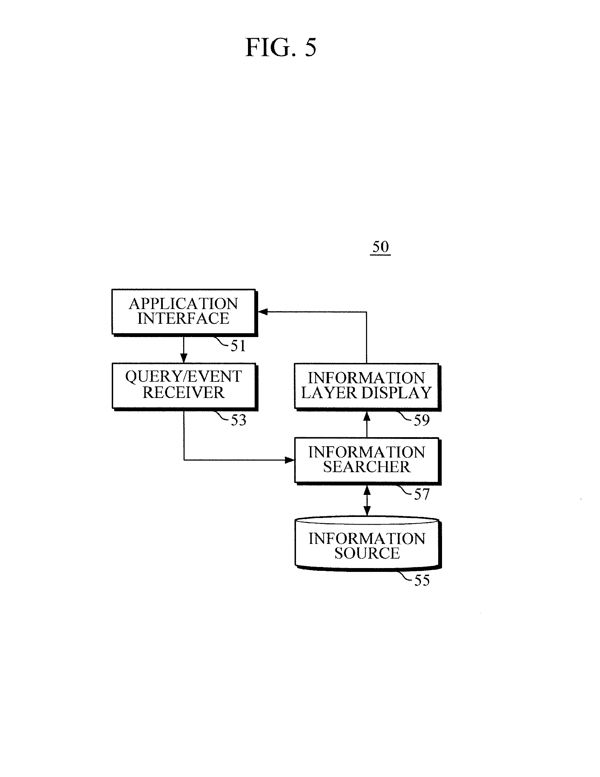

FIG. 5 is a block diagram illustrating another example of the information search system.

Referring to FIG. 5, the information search system 50, which is similar to that illustrated in FIG. 2, has a query determined by a user.

In accordance with one configuration, the information search system 50 includes various components, such as an application interface 51, a query/event receiver 53, an information source 55, an information searcher 57, and an information layer display 59.

The application interface 51 is a user interface offered by a particular application. The user may feel the need to search for information while inputting text through the application interface 51.

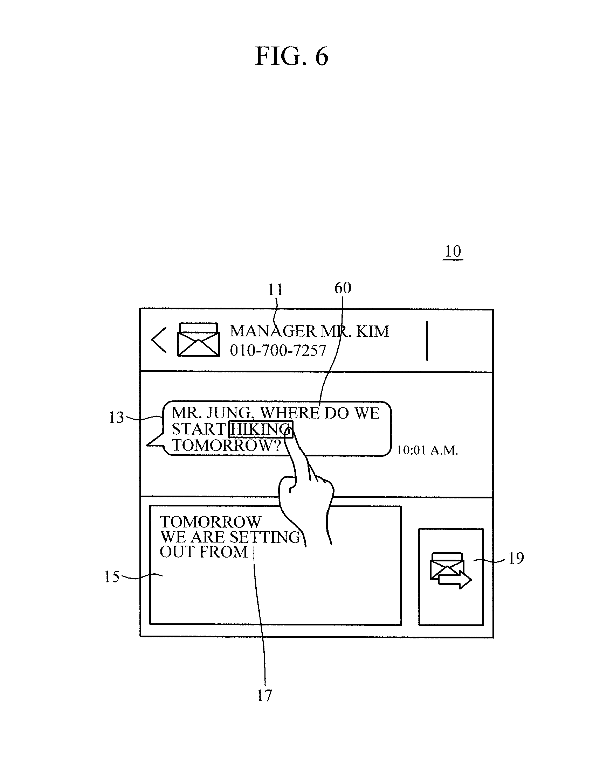

In this case, the user may choose a query while performing a predefined event to initiate an operation of the information search system 50. For example, the user may select a keyword or key sentence of interest from among content displayed on the application interface 51, and touch a button for activation of an information search function or input a gesture. Then, the query/event receiver 53 may receive both the event to initiate the information search function and the query designated by the user through the application interface 51. The user's designation of a query will be further described below with reference to FIG. 6.

In response to the query/event receiver 53 receiving the query and the event to initiate the information search function, the information searcher 57 may perform information search using the received query. The information searcher 57 may search the information source 55 using a general keyword-based search mechanism or semantic relevance-based search mechanism. The information layer display 59 may generate an information layer and display the information layer within the application interface 51.

For example, when a user needs to look up a meaning of a particular word in a dictionary while writing a document, or when the user needs to search for specific information from an email message, the user may select and block a word or sentence to be designated as a query, and then double click the blocked word or sentence with a mouse or double-tap on the blocked word or sentence with the user's finger. Then, the information search system 50 may search for information from the information source using the displayed blocked query, and displays an information layer containing the information item indicating the search result.

Accordingly, the information search system 50 enables the user to choose a query of interest from the information displayed on a current screen, without leaving the screen, thereby allowing for automatic search of relevant information in response to a user's simple touch gesture, and providing the search result to an additional layer.

FIG. 6 is a diagram illustrating an example of a method of a user to manually choose a query according to the example illustrated in FIG. 5.

Referring to FIG. 6, the user selects a query of interest from content displayed on an application interface 10. In this example, the user chooses a word "hiking" as a query 60 from a message displayed within a previous message displaying area 13 of the application interface 10 with a finger. Although the user selects only one word in this example, the aspects of the present disclosure are not limited thereto. The user may designate a part or all of content displayed on objects 11, 13, 15, and 19 included in the application interface 10, as a query.

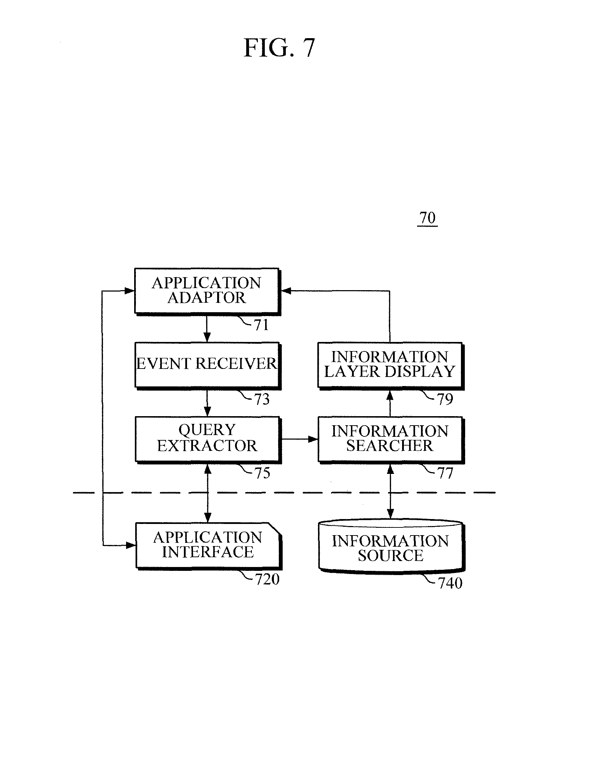

FIG. 7 is a block diagram illustrating another example of the information search system.

Referring to FIG. 7, the information search system 70 may be implemented not to be subordinated to a particular application, but to be of independent form.

The information search system 70 may be separately executed and installed independently of an application interface 720 and an information source 740. Thus, although only one application interface 720 and only one information source 740 are illustrated in the drawings, a plurality of different application interfaces and a plurality of different information sources may mutually interact with the information search system 70.

The information search system 70 includes various components, such as an application adaptor 71, an event receiver 73, a query extractor 75, an information searcher 77, and an information layer display 79.

The application adaptor 71 is a component that enables the information search system 70 to communicate with various application interfaces 720. Similar to the application interface 10 illustrated in FIG. 1, the application interface 720 may be a user interface that is provided by an application for mutual interaction with a user wherein the application is installed in a computing device, such as a smartphone, to execute a specific function. When the user feels the need to search for information while inputting text through the application interface 720, the user may take an action for causing a predetermined event to occur.

In this case, the user may take the action for causing the predetermined event to occur in order to initiate an operation of the information search system 70. For example, the user may touch a button displayed on the application interface 720 or input a predefined touch gesture. Then, the event receiver 73 may receive the event to initiate an information search function from the application interface 720 through the application adaptor 71.

In response to the event receiver 73 receiving the event to initiate the information search function, the query extractor 75 extracts a query from the content displayed within the application interface 720. The information searcher 77 performs information search using the extracted query. The information searcher 77 searches the information source 740 using a general keyword-based search mechanism or semantic relevance-based search mechanism. In this example, the information source 740 may be a component that is provided independent of the application interface 720 or the information search system 70.

The information layer display 79 generates an information layer and displays it within the application interface 720 through the application adaptor 71. The information layer may include a source item in text form which indicates the information found by the information searcher 77, and a source item that indicates the source of the information item.

The information search system 70 in accordance with an example may be implemented as, for example, a part of an operating system or an independent application, rather than software subordinated to a particular application. According to the examples, relevant information of the information displayed on a current screen can be automatically searched by a user's simple touch gesture, without requiring the user to leave the current screen, regardless of the kind of application, and the search result may be provided on an additional layer.

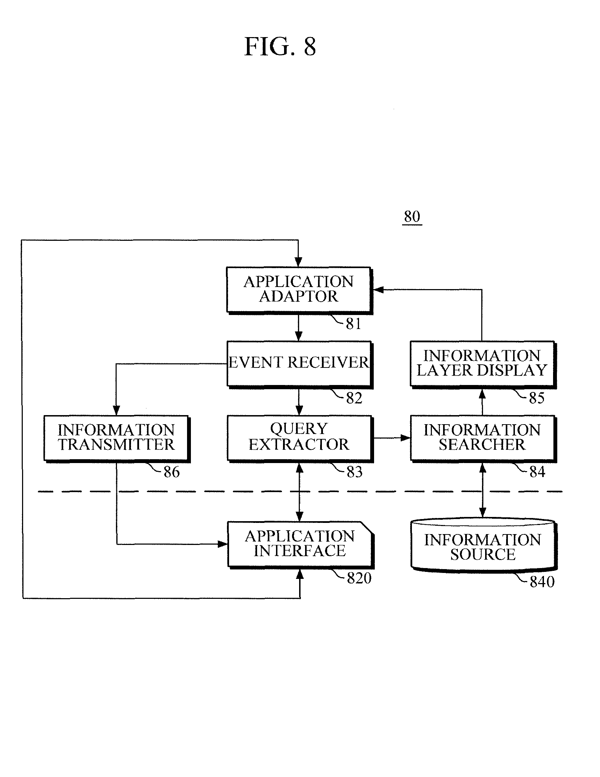

FIG. 8 is a block diagram illustrating another example of the information search system.

Referring to FIG. 8, an information search system 80 implemented as an independent entity enabling an input of an information item provided on an information layer to an application interface is illustrated.

The information search system 80 may be separately executed and installed independently of an application interface 820 and an information source 840. Thus, although only one application interface 820 and only one information source 840 are illustrated in the drawings, a plurality of different application interfaces and a plurality of different information sources may mutually interact with the information search system 80.

The information search system 80 includes various components, such as an application adaptor 81, an event receiver 82, a query extractor 83, an information searcher 84, an information layer display 85, and an information transmitter 86. Although FIG. 8 illustrates the application adaptor 81, the event receiver 82, the query extractor 83, the information searcher 84, the information layer display 85, and the information transmitter 86 included in the information search system 80, these components may be embodied as independent hardware. Therefore, the information search system 80 illustrated in FIG. 8 is not limited thereto and thus may include more or less components.

The application adaptor 81 is a component for allowing the information search system 80 to communicate with various different application interfaces 820. Similar to the application interface 10 of FIG. 1, the application interface 820 may be a user interface that is provided by an application for mutual interaction with a user wherein the application is installed in a computing device, such as a smartphone, to execute a specific function. When the user feels the need to search for information while inputting text through the application interface 820, the user may take an action for causing a predetermined event to occur in order to initiate an operation of the information search system 80.

For example, the user may touch a button displayed on the application interface 820 or input a predefined touch gesture. Then, the event receiver 82 receives the event to initiate an information search function from the application interface 820 through the application adaptor 81.

In response to the event receiver 82 receiving the event to initiate the information search function, the query extractor 83 extracts a query from the content displayed within the application interface 820. The information searcher 84 performs information search on the information source 840 using the extracted query.

The information layer display 85 generates an information layer and displays it within the application interface 820 through the application adaptor 81. As described with reference to FIGS. 3 and 4, the information layer includes an information item in text form which indicates the information found by the information searcher 84, and a source item that indicates the source of the information item.

For example, the user may double touch an information item on the information layer within the application interface 820 to input the information item into a currently created sentence within the application interface 820. In this example, in response to the user's double touch on the information item on the information layer displayed within the application interface 820, the event receiver 82 receives the touch event as an information item input event via the application adaptor 81. Then, the information transmitter 86 transmits the information item within the information layer to an application that controls the application interface 820. In this case, the application treats the information item received from the information transmitter 86 as input information that is similar to input information from a keyboard.

The information search system 80 in accordance with an example allows relevant information of the information currently displayed on a screen to be automatically searched by a user's simple touch gesture, without requiring the user to leave the current screen on which the user is working, provides the search result on an additional layer, and allows the user to easily input the provided information while executing the current task.

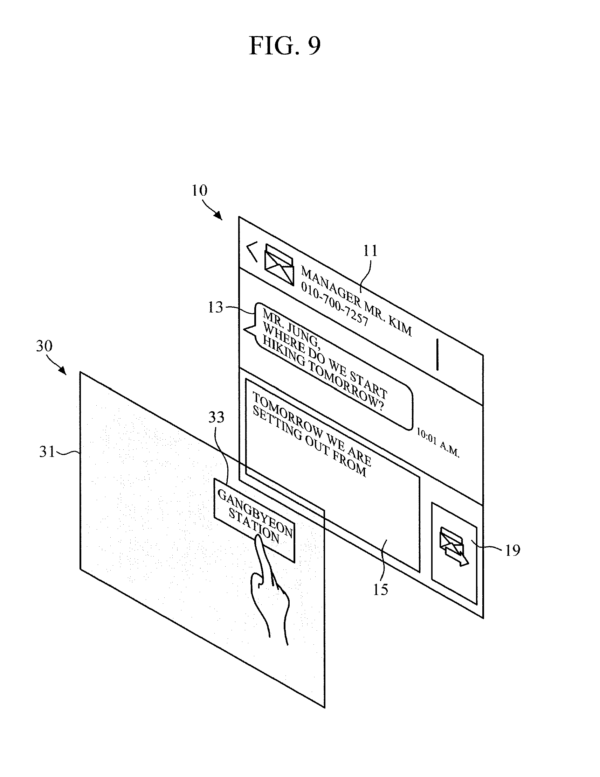

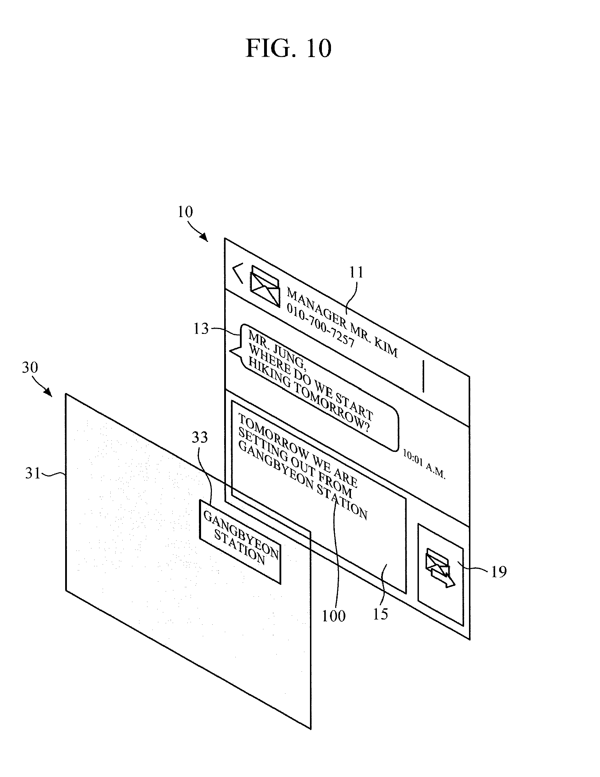

FIG. 9 and FIG. 10 are diagrams illustrating an example of an event for inputting an information item to an information layer and a result of transmitting the information item in accordance with the example of FIG. 8.

Referring to FIG. 9, a user touches an information item 33 displayed on an information layer 30. In response to the touch event, the information item 33 is transmitted to a predetermined object among the existing objects beneath the information layer 30. Referring to FIG. 10, the information item 33 is copied and pasted into an input form 15 in which a text message is created, from among the existing objects of an application interface 10. The information item 33 displayed on the information layer 30 is transmitted and input at a position (for example, a cursor position) at which the user is about to input text immediately before activating the search function.

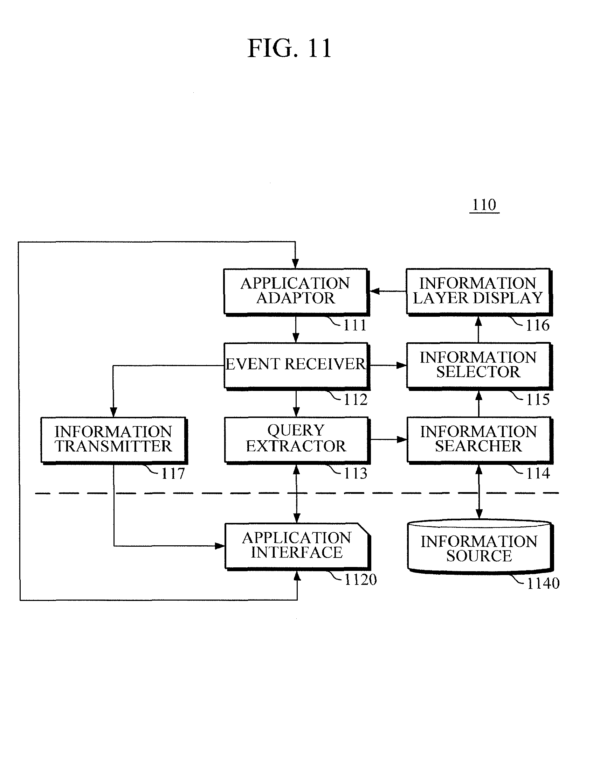

FIG. 11 is a diagram illustrating another example of the information search system.

Referring to FIG. 11, an information search system 110, as an independent entity, capable of providing a plurality of information items to an information layer and allowing a user to select an information item of interest and input the item of interest on an application interface, is illustrated.

The information search system 110 may be separately executed and installed independently of an application interface 1120 and an information source 1140. Thus, although only one application interface 1120 and only one information source 1140 are illustrated in the drawings, a plurality of different application interfaces and a plurality of different information sources may mutually interact with the information search system 110.

The information search system 110 includes various components, such as an application adaptor 111, an event receiver 112, a query extractor 113, an information searcher 114, an information selector 115, an information layer display 116, and an information transmitter 117. Although FIG. 11 illustrates the application adaptor 111, the event receiver 112, the query extractor 113, the information searcher 114, the information selector 115, the information layer display 116, and the information transmitter 117 included in the information search system 110, the components may be embodied as independent hardware. Therefore, the information search system 110 illustrated in FIG. 11 is not limited thereto and thus may include more or less components.

The application adaptor 111 is a component for allowing the information search system 110 to communicate with various different application interfaces 1120. Similar to the application interface 10 of FIG. 1, the application interface 1120 may be a user interface that is provided by an application for mutual interaction with a user wherein the application is installed in a computing device, such as a smartphone, to execute a specific function. When the user feels a need to search for information while inputting text through the application interface 1120, the user may take an action for causing a predetermined event to occur in order to initiate an operation of the information search system 110.

For example, the user may touch a button displayed on the application interface 1120 or input a predefined touch gesture. Then, the event receiver 112 receives the event to initiate an information search function from the application interface 1120 through the application adaptor 111.

In response to the event receiver 112 receiving the event to initiate the information search function, the query extractor 113 extracts a query from the content displayed within the application interface 1120. The information searcher 114 performs information search on the information source 1140 using the extracted query.

The information selector 115 is a component for selecting an information item to be displayed on the information layer from among a plurality of information items produced as a result of searching by the information searcher 114. At an early stage, the information selector 115 sets the display order of the information items according to a previously stored standard. The standard for selection of the information selector 15 may include, for example, a creation date of the source of the searched information item, an information source, and the like. Then, the information selector 115 makes the selection, in such a way that a different information item is displayed according to an information item selection event received by the event receiver 112.

The information layer display 116 generates an information layer and displays the information layer within the application interface 1120 through the application adaptor 111. As described with reference to FIGS. 3 and 4, the information layer displays both information items selected by the information selector 115 from information items in text form and source items selected by the information selector 115 from a plurality of source items, wherein each of the information items indicates the information found by the information searcher 114, and each of the source items indicates the source of the information item. In this example, the information layer may include an input button or an arrow-shaped control to enable the user to display another information item that is different from a currently displayed information item.

In addition, the user may choose to display another information item by performing a sliding touch gesture on the information item currently displayed on the information layer of the application interface 1120. In a case where an information item currently displayed on the information layer is determined as an information item of interest, the user may double touch the information item. Then, the information item may be input into the sentence currently created within the application interface 1120. In this example, in response to a user's double touch on the information item on the information layer displayed within the application interface 1120, such a touch event may be received by the event receiver 112 via the application adaptor 111 as an information item input event. Then, the information transmitter 116 transmits the information item within the information layer to an application that controls the application interface 1120. In this case, the application may treat the information item received from the information transmitter 116 as input information that is similar to input information from a keyboard.

Therefore, the information search system 110 in accordance with the an example allows relevant information of the information currently displayed on a screen to be automatically searched by a user's simple touch gesture, without requiring the user to leave the current screen on which the user is working, provides the search result on an additional layer, and allows the user to select intended information from the provided information and easily inputs the selected information while executing the current task.

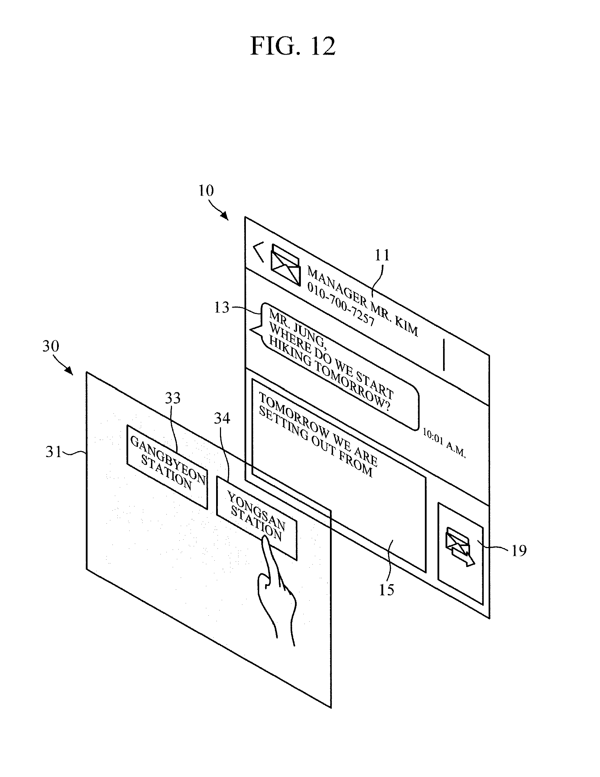

FIGS. 12 to 15 are diagrams illustrating various examples of an information layer provided in accordance with the example of FIG. 11.

Referring to FIG. 12, two information items 33 and 34 are provided on a base layer 31 of an information layer 30. The user selects and touches information of interest from among the displayed information items 33 and 34, and then the selected information is transmitted to an input form that the user is currently operating.

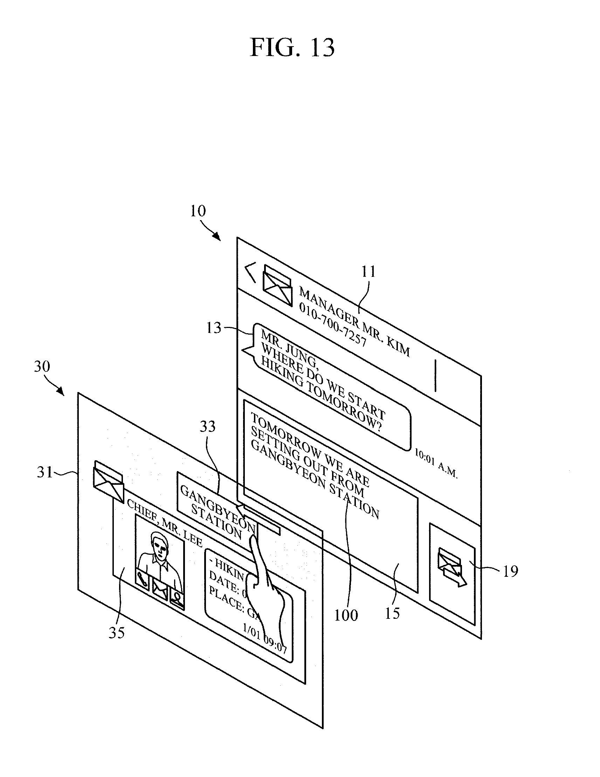

Referring to FIG. 13, one information item 33 and its relevant source item 35 are displayed on the base layer 31 of the information layer 30. In this example, knowing that the displayed information item 33 is not desired information, the user touches and slides the information item 33 to the side with a finger to see another information item. In response to the user gesture, a different information item may be displayed on the information layer 30. Furthermore, although the above example describes a user sliding the information item 33 with his/her finger, this is only exemplary and a person of ordinary skill in the relevant art will appreciate that any other item may be used to slide the information item 33, such as for example a stylus or pen.

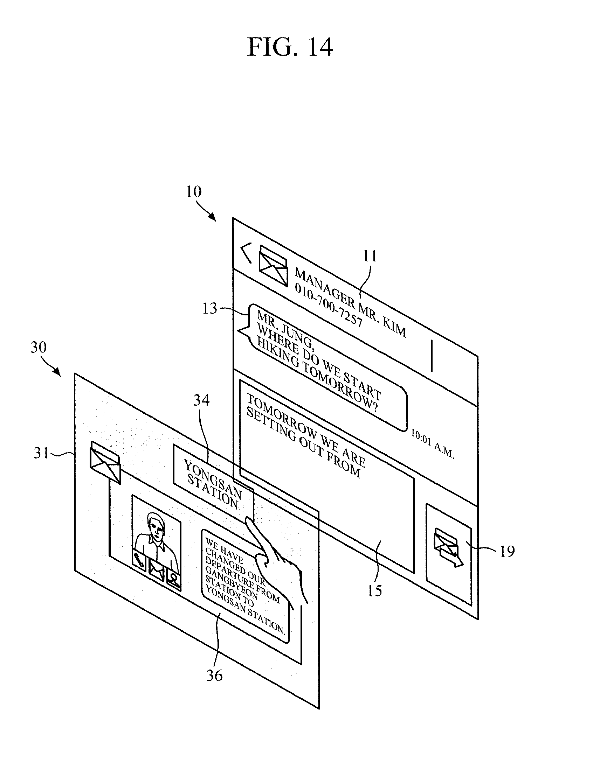

Referring to FIG. 14, different information item 34 and its relevant source item 36 are provided according to the user's sliding touch event of FIG. 13. Once determined that the currently displayed information item 34 indicates the desired information, the user may touch the information item 34 to be inserted into a currently created text message.

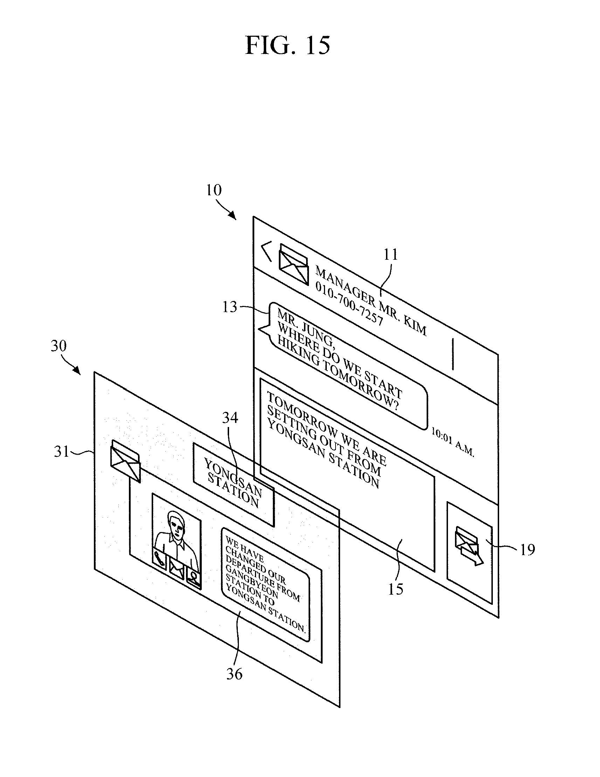

FIG. 15 is a diagram illustrating an example of text inserted into a currently created text message.

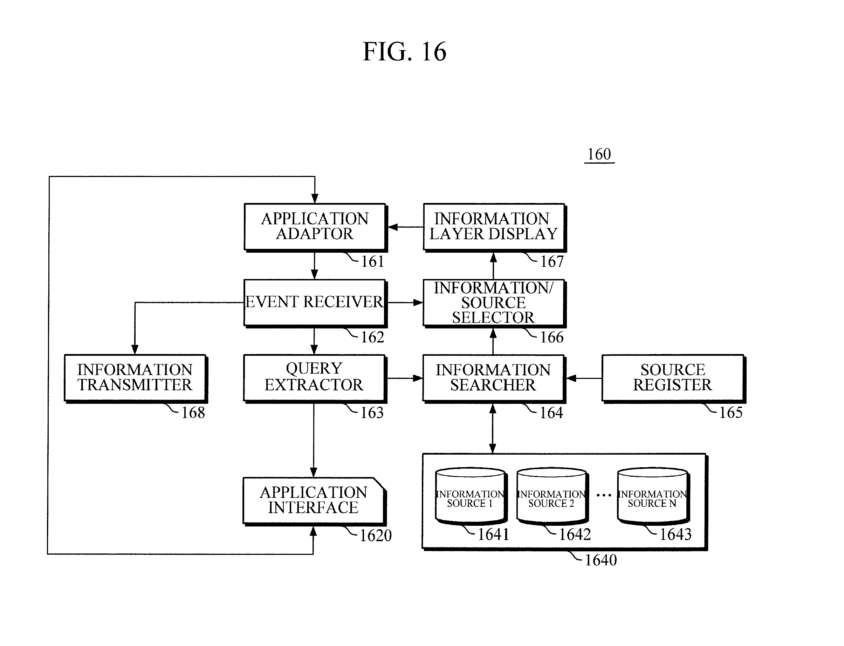

FIG. 16 is a block diagram illustrating another example of the information search system.

Referring to FIG. 16, an information search system 160 that may be implemented as an independent entity capable of searching a plurality of information sources, providing a plurality of information items onto an information layer, selecting information sources of interest as search targets, and allowing a user to select an information item from a search result and input the selected information item to an application interface is illustrated.

The information search system 160 may be separately executed and installed independently of an application interface 1620 and an information source 1640. Thus, although only one application interface 1620 and only one information source 1640 are illustrated in the drawings, a plurality of different application interfaces and a plurality of different information sources may mutually interact with the information search system 160.

The information search system 160 includes various components, such as an application adaptor 161, an event receiver 162, a query extractor 163, an information searcher 164, a source register 165, an information/source selector 166, an information layer display 167, and an information transmitter 168. Although FIG. 16 illustrates the application adaptor 161, the event receiver 162, the query extractor 163, the information searcher 164, the source register 165, the information/source selector 166, the information layer display 167, and the information transmitter 168 included in the information search system 160, the various components may also be embodied as independent hardware. Therefore, the information search system 160 illustrated in FIG. 16 is not limited thereto and thus may include more or less components.

The application adaptor 161 is a component that enables the information search system 160 to communicate with various application interfaces 1620. Similar to the application interface 10 illustrated in FIG. 1, the application interface 1620 may be a user interface that is provided by an application for mutual interaction with a user wherein the application is installed in a computing device, such as a smartphone, to execute a specific function. When the user needs to search for information while inputting text through the application interface 1620, the user may take an action for causing a predetermined event to occur in order to initiate an operation of the information search system 160.

For example, the user may touch a button displayed on the application interface 1620 or input a predefined touch gesture. Then, the event receiver 162 may receive the event to initiate an information search function from the application interface 1620 through the application adaptor 161.

In response to the event receiver 162 receiving the event to initiate the information search function, the query extractor 613 extracts a query from the content displayed within the application interface 1620. The information searcher 164 performs information search on the information source 1640 using the extracted query.

In this example, the information source 1640 includes a total of N different information sources 1641, 1642, and 1643. In accordance with one configuration, the user uses the source register 165 to take any necessary actions, such as, addition, editing, deletion, and the like, to the information source to be searched by the information searcher 164. For example, the user may change the existing information source route by editing a file path or account information when a new information source access route has been added by registration, an unnecessary information source access route has been deleted, or a method of accessing the information source has changed. Further, the user may use the source register 165 to determine the search order of a plurality of information sources.

In accordance with one configuration, the information/source selector 166 selects an information item to be displayed on the information layer from a plurality of information items produced as a result of searching by the information searcher 164. In addition, the information/source selector 166 may select the information item to be displayed on the information layer from the plurality of information items by selecting an information source. The information/source selector 166 may determine the order of displaying the information items or information sources according to a previously stored standard. The standard for selection of the information selector 166 may include, for example, a creation date of the source of the searched information item, the search order of an information source, and the like. Then, the information selector 166 may make the selection, in such a way that a different information item is displayed according to an information item selection event received by the event receiver 162.

In accordance with one configuration, the information layer display 167 generates an information layer and displays the information layer within the application interface 1620 through the application adaptor 161. As described with reference to FIGS. 4 and 5, in one example, the information layer displays both information items selected by the information selector 166 from information items in text form and source items selected by the information selector 166 from a plurality of source items. Each of the information items indicates the information found by the information searcher 164, and each of the source items indicates the source of the information item. In this example, the information layer may include an input button or an arrow-shaped control to enable the user to display another information item or source item that is different from a currently displayed information item or source item.

Moreover, for example, the user may choose to display another information item by performing a sliding touch gesture on the information item currently displayed on the information layer of the application interface 1120 but is not limited thereto. That is, the other information may be displayed by using a stylus or pen or any other suitable instrument. In a case where an information item currently displayed on the information layer is determined as an information item of interest, the user may double touch the information item. Then, the information item may be input into the sentence currently created within the application interface 1620. In this example, in response to a user's double touch on the information item on the information layer displayed within the application interface 1620, such a touch event may be received by the event receiver 162 via the application adaptor 161 as an information item input event. Then, the information transmitter 167 transmits the information item within the information layer to an application that controls the application interface 1620. In this case, the application treats the information item received from the information transmitter 167 as input information that is similar to input information from a keyboard.

As such, the information search system 160 in accordance with an example allows relevant information of the information currently displayed on a screen to be automatically searched by a user's simple touch gesture, without requiring the user to leave the current screen, provides the search result on an additional layer, and allows the user to select intended information from the provided information and easily inputs the selected information while executing the current task.

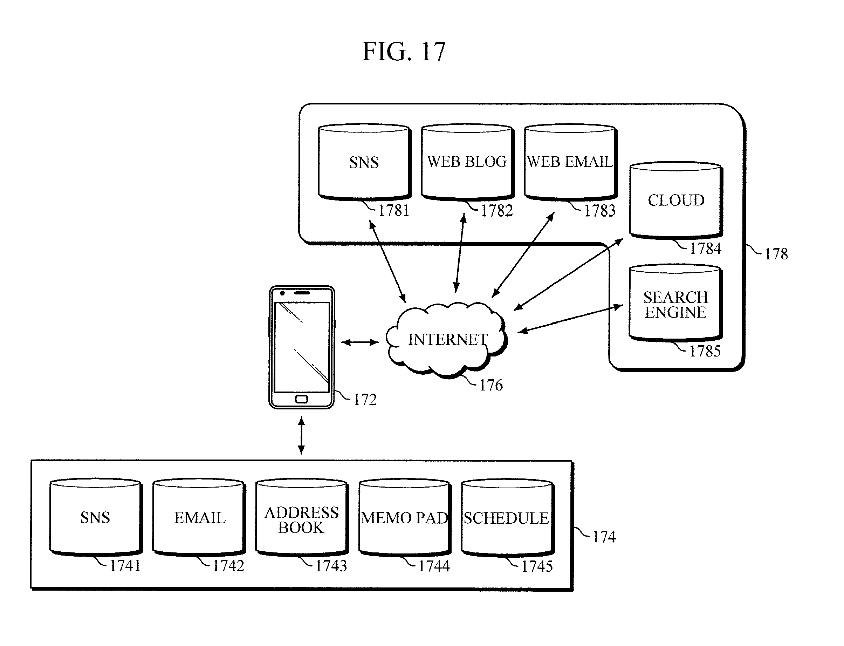

FIG. 17 is a diagram illustrating an example of an information source to be registered according to an example of FIG. 16.

Referring to FIG. 17, the user mounts the information search system 160 of FIG. 16 to a computing device 172, such as a smartphone. In this case, the user may register data of various applications included in the computing device 170 as a local information source 174 available for search by the information search system 160. The local information source 174 may include, but not limited to, SMS text message data 1741, email data 1742, address book data 1743, memo-pad data 1744, schedule data 1745, and so forth. Any data accessible by the information search system 160 may be used as information sources. For example, document files, image files, music files, video files, and so forth which are saved in the computing device 172 may also be used as information sources.

In addition, the user may register data within a remote device connectable with the computing device 172 over a communication network as a remote information source 178 available for search by the information search system 160. In the illustrated example, the communication network is the Internet 176, but aspects of the present example are not limited thereto, such that various communication networks, such as Bluetooth®, near field radiofrequency communication, Intranet, wireless telephone network, and the like can be used. The remote information source 178 may include various data accessible through the Internet, such as SNS data 1781, web blog data 1782, web email data 1783, cloud data 1784, data 1785 found by a search engine, and the like, but aspects of the present example are not limited thereto.

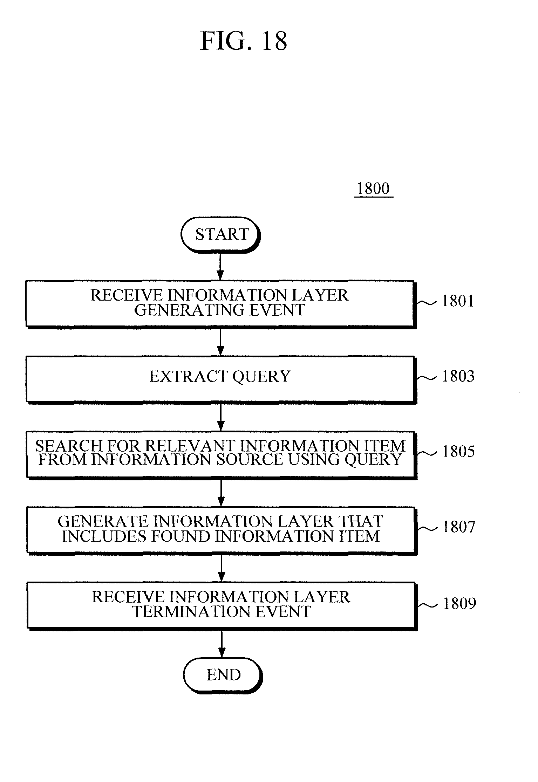

Hereinafter, examples of an information search method are described with reference to FIGS. 18 to 24. The information search methods described herein are provided only for purpose of example. It will be understood by those of ordinary skill in the art that various changes, modifications, and equivalents of the methods may be made therein without departing from the scope of the present example. A part or all of the information search methods may be embodied as computer readable codes, such as computer-executable instructions, modules, software, data, algorithms, procedures, and the like, which cause a processor of a computing device to execute or perform a particular task. The computer-executable instructions, etc. may be coded in programing language, such as Basic, Fortran, C, C++, and so forth, and then compiled into machine language by, for example, a software developer.

FIG. 18 is a flowchart illustrating an example of an information search method.

Referring to FIG. 18, an information search method 1800 starts by receiving the information-layer generating event in operation 1801 which a user has triggered using an application interface. As described with reference to FIGS. 1 to 16, the application interface is a user interface accessible by an application that enables the user to perform a task such as the creation of a message or of a document. For example, the user touches a button for activation of an information search function or inputs a predefined gesture. Accordingly, the information layer generating event is received in operation 1801.

In response to receiving the information layer generating event, a query is extracted from the content displayed within the application interface in operation 1803. For example, in a case of the application interface 10 of FIG. 1, the entire message that is displayed within a particular object, such as the previous message displaying area 13, is extracted as a query.

Then, information sources are searched using the extracted query in operation 1805. The information search may be performed on the information sources using a general keyword-based search mechanism or semantic relevance-based search mechanism.

The search result is generated as an information item, and an information layer including the information item is generated to be displayed within a layer overlying the existing objects of the application interface in operation 1807.

For example, when a user needs to look up a meaning of a particular word in a dictionary while writing a document, or to search for specific information from an email message, the user double clicks a text input position with a mouse or double-taps on the text input position with the user's finger. Then, the information search method 1800 is performed, and as a result, an information layer with an information item is displayed. The information layer overlays at a current text input position on the application interface with which the user is currently writing on a document. Then, in response to receiving an information layer termination event in operation 1809 after a predetermined lapse of time or in response to a user input generated by touching a particular position within the application interface or on the information layer, the information layer disappears.

As such, the information search method 1800 in accordance with an example allows relevant information of the information currently displayed on a screen to be automatically searched by a user's simple touch gesture, without requiring the user to leave the current screen on which a task is running, and provides the search result on an additional layer.

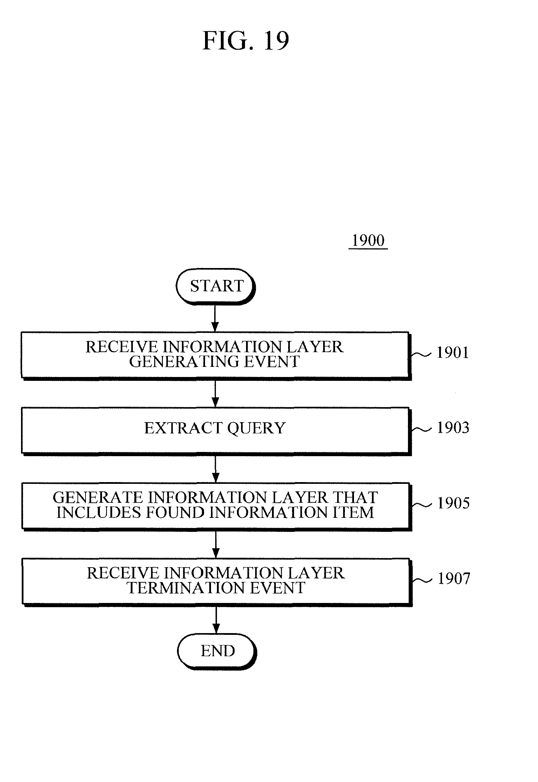

Fig. 19 is a flowchart illustrating another example of the information search method.

Referring to FIG. 19, an information search method 1900 starts by receiving an information layer-generating event in operation 1901 which has occurred through an application interface after a user selected a query. The application interface is a user interface that is provided by an application for allowing a user to create a message or a document, as described with reference to FIGS. 1 to 16. For example, the user selects at least part of the message displayed on the application interface, touches a button for activation of an information search function, or inputs a predefined touch gesture. As a result, the selected message is received as a query, and the information layer generating event is received in operation 1901.

In response to receiving the query/information layer generating event, the information source is searched using the received query in operation 1903. The information search may be performed on the information sources using a general keyword-based search mechanism or a semantic relevance-based search mechanism.

The search result is generated as an information item, and an information layer including the information item is generated to be displayed within a layer overlying the existing objects of the application interface in operation 1905.

For example, when a user needs to look up a meaning of a particular word in a dictionary while writing a document, or to search for specific information from an email message, the user may select a particular word and then double click the selected word with a mouse or double touch with a finger. Then, the information search method 1900 is performed, and as a result, an information layer with an information item is displayed. The information layer overlays at a current text input position on the application interface with which the user is currently writing a document. Then, in response to receiving an information layer termination event in operation 1907 after a predetermined lapse of time or in response to a user input generated by touching a particular position within the application interface or on the information layer, the information layer disappears.

As such, the information search method 1900 in accordance with one example allows relevant information of the selected word to be automatically found from the information currently displayed on a screen by a user's simple touch gesture, without requiring the user to leave the current screen on which a task is running, and provides the search result on an additional layer.

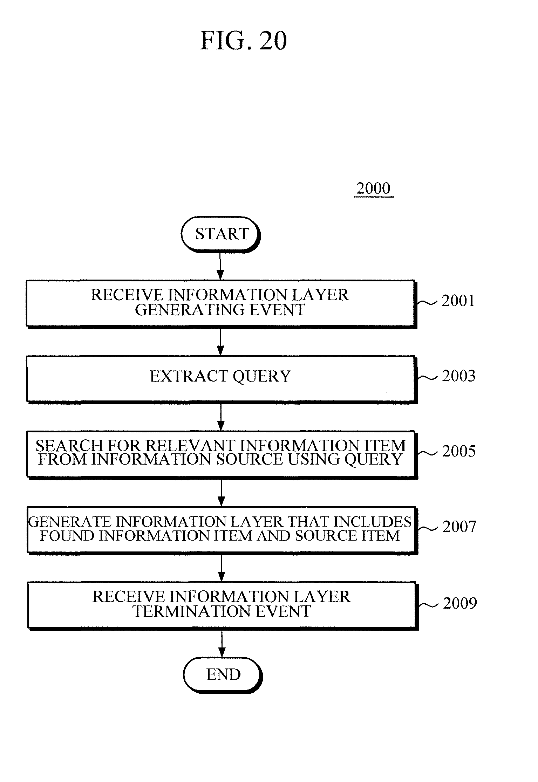

FIG. 20 is a flowchart illustrating another example of the information search method.

Referring to FIG. 20, an information search method 2000 starts by receiving an information layer generating event in operation 2001, which a user has triggered using an application interface. The application interface, as described with reference to FIGS. 1 to 16, may be a user interface that is provided by an application for allowing a user to create a message or a document. For example, the user may touch a button on the application interface for activation of an information search function, or input a predefined touch gesture. Consequently, the information layer generating event may be received in operation 2001.

In response to receiving the information layer generating event, a query is extracted from the content displayed within the application interface in operation 2003. For example, in the case of the application interface 10 of FIG.1, the query extraction is performed using the entire message displayed within a particular object, such as a previous message displaying area 13, as a query.

Then, information sources are searched using the extracted query in operation 2005. In accordance with one configuration, the information search is performed on the information sources using a general keyword-based search mechanism or a semantic relevance-based search mechanism.

The search result is generated as an information item and a source item that indicates information of a source from which the information item is found, and an information layer including the information item and the source item is generated to be displayed within a layer overlying the existing objects of the application interface in operation 2007.

For example, when a user needs to look up a meaning of a particular word in a dictionary while writing a document, or to search for specific information from an email message, the user may double click a text input position with a mouse or double-tap on the text input position with the user's finger. Then, the information search method 2000 is initiated, and as a result of the information search, an information layer with an information item and a relevant source item is displayed. The information layer overlays at a current text input position on the application interface with which the user is currently writing a document. Then, in response to receiving an information layer termination event in operation 2009 after a predetermined lapse of time or in response to a user input generated by touching a particular position within the application interface or on the information layer, the information layer disappears.

Accordingly, in one configuration, the information search method 2000 allows relevant information of the information displayed on a current screen to be automatically searched by a user's simple touch gesture, without requiring the user to leave the current screen on which a task is running, and provides the search result on an additional layer.

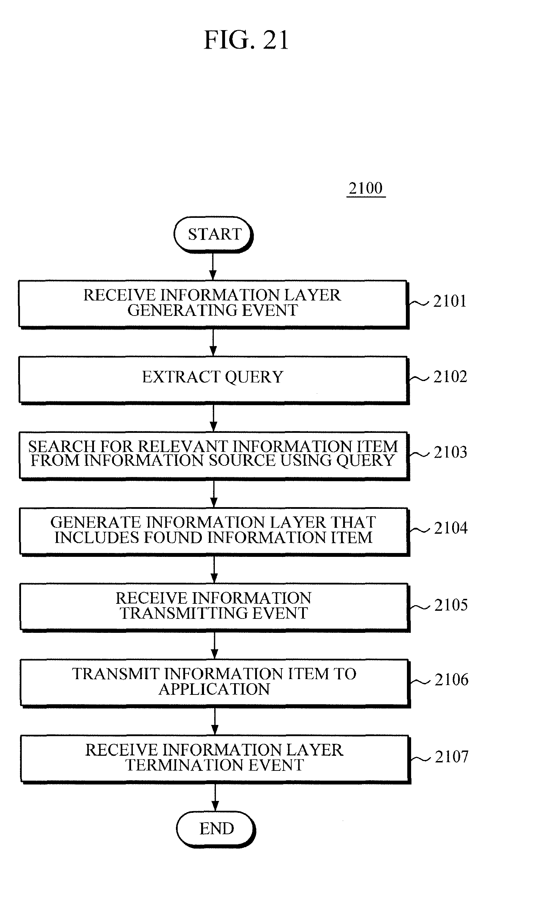

FIG. 21 is a flowchart illustrating another example of the information search method.

Referring to FIG. 21, an information search method 2100 starts by receiving an information layer generating event in operation 2101 which a user has triggered using an application interface. As described with reference to FIGS. 1 to 16, the application interface is a user interface offered by an application that enables the user to perform a task such as message or document creation. For example, the user may touch a button for activation of an information search function or input a predefined gesture. Accordingly, the information layer generating event may be received in operation 2101.

In response to receiving the information layer generating event, a query is extracted from the content displayed within the application interface in operation 2102. For example, in the case of the application interface 10 of FIG.1, the query extraction is performed using the entire message displayed within a particular object, such as a previous message displaying area 13, as a query.

Thereafter, information sources are searched using the extracted query in operation 2103. In accordance with one configuration, the information search is performed on the information sources using a general keyword-based search mechanism or a semantic relevance-based search mechanism.

The search result is generated as an information item, and an information layer including the information item is generated to be displayed within a layer overlying the existing objects of the application interface in operation 2104.

Then, a user inputs an information transmitting event by touching an information item displayed on the information layer in order to input the information item into the existing object of the application interface. Accordingly, the information transmitting event is received in operation 2105.

In response to receiving the information transmitting event, the information item is transmitted to the application in operation 2106. Accordingly, text equivalent to the information item on the information layer is input at a text input position where the user inputs the text immediately before executing the information search method 2100.

For example, when a user needs to look up a meaning of a particular word in a dictionary while writing a document, or to search for specific information from an email message, the user double clicks a text input position with a mouse or double-taps on the text input position with the user's finger. Then, the information search method 2100 is initiated, and as a result of the information search, an information layer with an information item is displayed. The information layer overlays at a current text input position on the application interface with which the user is creating the document. The user inputs text equivalent to the information item on the information layer to the current text input position by touching the information item displayed on the information layer.

Thereafter, in response to a user's finger touch input to a particular position on the application interface or the information layer, an information layer termination event is received in operation 2107 and accordingly, the information layer disappears.

Accordingly, in one configuration, the information search method 2100 allows relevant information of the information currently displayed on a screen to be automatically searched by a user's simple touch gesture, without requiring the user to leave the current screen on which the user is working, provides the search result on an additional layer, and allows the user to easily input the provided information to the screen.

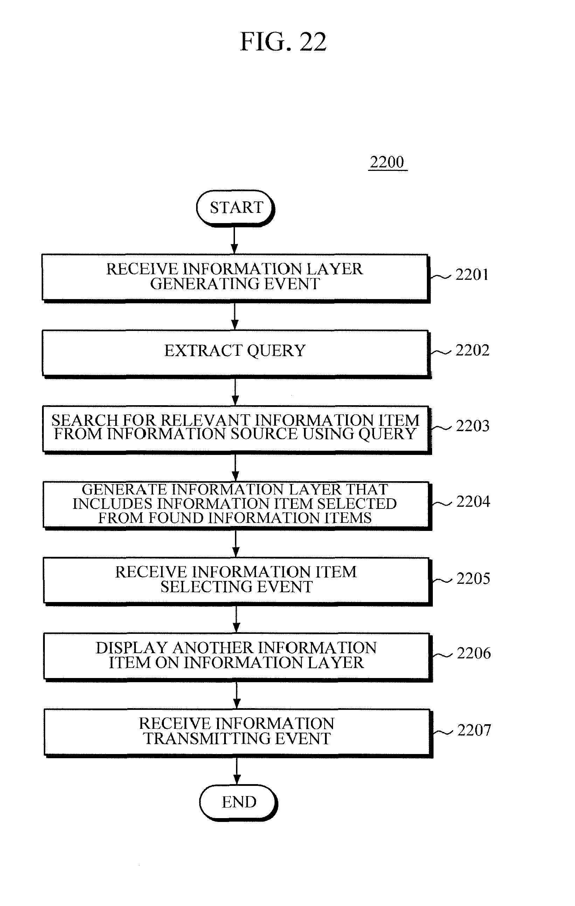

FIG. 22 is a flowchart illustrating another example of the information search method.

Referring to FIG. 22, the information search method 2200 starts by receiving an information layer generating event in operation 2201 which a user has triggered using an application interface. As described with reference to FIGS. 1 to 16, the application interface is a user interface offered by an application that enables the user to perform a task such as the creation of a message or of a document. For example, the user touches a button for activation of an information search function or inputs a predefined gesture. Accordingly, the information layer generating event is received in operation 2201.

In response to receiving the information layer generating event, a query is extracted from the content displayed within the application interface in operation 2202. For example, in a case of the application interface 10 of FIG. 1, the entire message that is displayed within a particular object, such as the previous message displaying area 13, is extracted as a query.

Then, information sources are searched using the extracted query in operation 2203. The information search is performed on the information sources using a general keyword-based search mechanism or a semantic relevance-based search mechanism.

The search result is generated as an information item, and an information layer including the information item is generated to be displayed within a layer overlying the existing objects of the application interface in operation 2204. A plurality of information items of the search result are generated. The plurality of generated information items are displayed all together on the same information layer. Alternatively, some information items that have been generated earlier than the others are selected and displayed first on the information layer.

The user may choose to display another information item by performing a sliding touch gesture on the information item currently displayed on the information layer. Then, an information item selection event is received in operation 2205.

In response to receiving the information item selection event, another information item is selected from the search result in operation 2203, and then is displayed on the information layer in operation 2206.

For example, when a user needs to look up a meaning of a particular word in a dictionary while writing a document, or to search for specific information from an email message, the user double clicks a text input position with a mouse or double-taps on the text input position with the user's finger. Then, the information search method 2200 is performed, and as a result, an information layer with an information item is displayed. The information layer overlays at a current text input position on the application interface with which the user currently writes the document. Then, the user controls another information item to be displayed by inputting a slide touch on the information item currently presented on the information layer.

Then, as the user inputs a touch input on a particular position of the application interface or the information layer, an information layer termination event is received in operation 2207 and accordingly, the information layer disappears.

As such, the information search method 2200 in accordance with an example allows relevant information of the information currently displayed on a screen to be automatically searched by a user's simple touch gesture, without requiring the user to leave the current screen, provides the search result on an additional layer, and allows the user to choose the provided information to be changed and displayed.

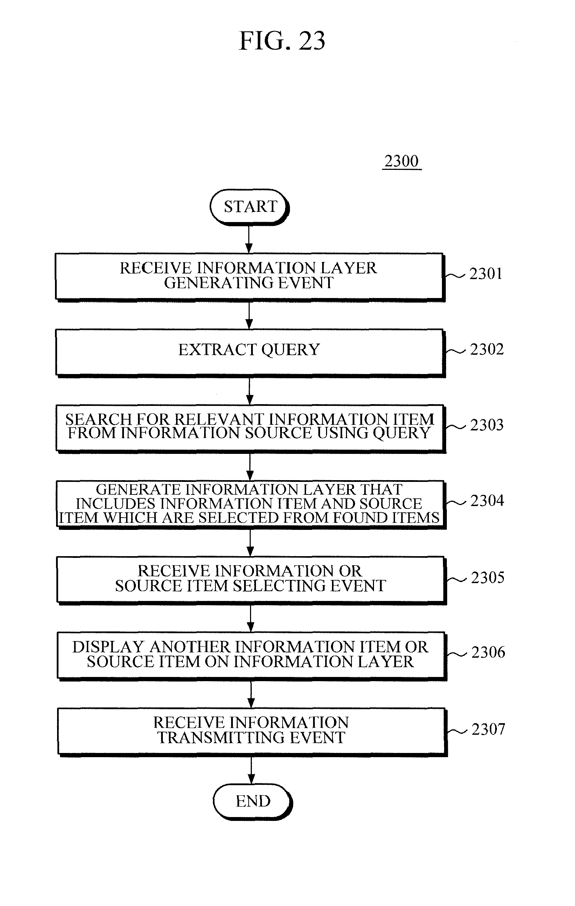

FIG. 23 is a flowchart illustrating another example of the information search method.

Referring to FIG. 23, an information search method 2300 starts by receiving an information layer generating event in operation 2301 which a user has triggered using an application interface. As described with reference to FIGS. 1 to 16, the application interface is a user interface offered by an application that enables the user to perform a task such as the creation of a message or of a document. For example, the user touches a button on the application interface for activation of an information search function or input a predefined gesture. Accordingly, the information layer generating event is received in operation 2301.

In response to receiving the information layer generating event, a query is extracted from the content displayed within the application interface in operation 2302. For example, in a case of the application interface 10 of FIG. 1, the entire message that is displayed within a particular object, such as the previous message displaying area 13, is extracted as a query.

Thereafter, information sources are searched using the extracted query in operation 2303. The information search is performed on the information sources using a general keyword-based search mechanism or a semantic relevance-based search mechanism

The search result is generated as an information item and a source item that indicates source information of the information item, and an information layer including the information item and the source item is generated to be displayed within a layer overlying the existing objects of the application interface in operation 2304. A plurality of information items of the search result are generated. Also, a plurality of source items for the respective information items are generated. In this case, there may be too many information items and source items to be displayed all together on the same information layer. Thus, for example, some information items and source items that have been generated earlier than the others may be selected and displayed first on the information layer.

The user may choose to display another information or source item by performing a sliding touch gesture on the information or source item that is currently displayed on the information layer. Then, an information or source item selecting event is received in operation 2305.

In response to receiving the information or source item selecting event, another information item or source item is selected from the search result of operation 2203 and the selected item is displayed on the information layer in operation 2306.

For example, when a user needs to look up a meaning of a particular word in a dictionary while writing a document, or to search for specific information from an email message, the user double clicks a text input position with a mouse or double-taps on the text input position with the user's finger. Then, the information search method 2300 is initiated, and as a result of the information search, an information layer with an information item is displayed. The information layer overlays at a current text input position on the application interface with which the user is creating the document. Then, the user controls another information item to be displayed by inputting a slide touch on the information item currently presented on the information layer.

Thereafter, as the user inputs a touch input on a particular position of the application interface or the information layer, an information layer termination event is received in operation 2307 and accordingly, the information layer disappears.

Accordingly, in one configuration, the information search method 2300 allows relevant information of the information currently displayed on a screen to be automatically searched by a user's simple touch gesture, without requiring the user to leave the current screen on which the user is working, provides the search result and the source of the search result on an additional layer, and allows the user to choose the provided information to be changed and displayed.

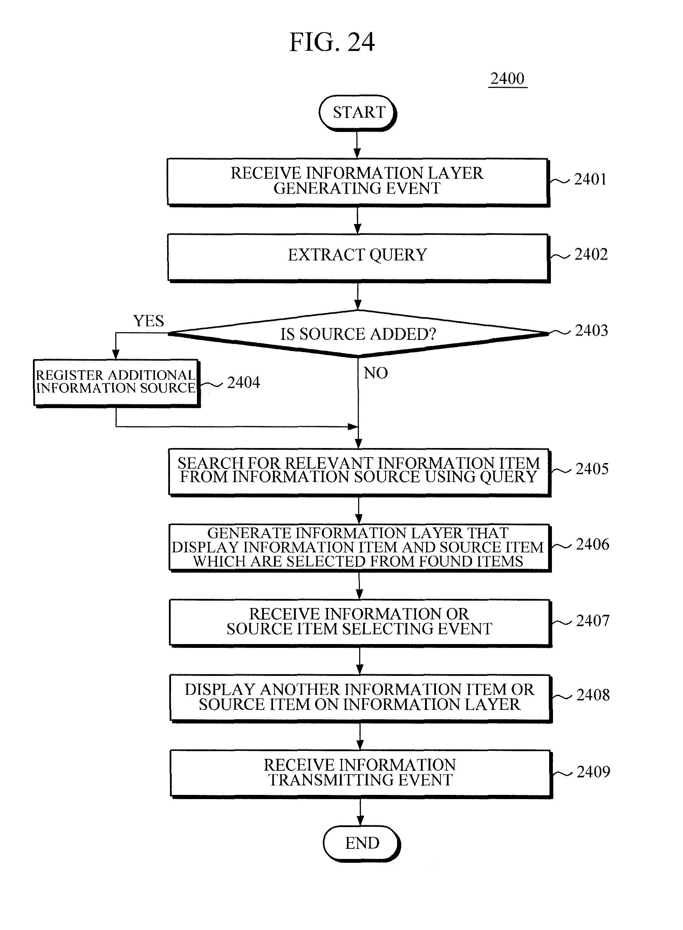

FIG. 24 is a flowchart illustrating another example of the information search method.

Referring to FIG. 24, an information search method 2400 starts by receiving an information layer generating event in operation 2401, which a user has triggered using an application interface. As described with reference to FIGS. 1 to 16, the application interface is a user interface offered by an application that enables the user to perform a task such as message or document creation. For example, in one configuration, the user touches a button on the application interface for activation of an information search function or inputs a predefined gesture. Accordingly, the information layer generating event is received in operation 2401.

In response to receiving the information layer generating event, a query is extracted from the content displayed within the application interface in operation 2402. For example, in the case of the application interface 10 of FIG.1, the query extraction is performed using the entire message displayed within a particular object, such as a previous message displaying area 13, as a query.

The addition of an information source in operation 2403 and the registration of the additional information source in operation 2404 may be performed simultaneously, before, or after the query extraction. In a confirmation process of operation 2403, the user activates a menu to add an information source. For example, after the activation of the menu to add an information source in operation 2403, the user registers an access route to an information source to additionally register the information source in operation 2404. In the example illustrated in FIG. 24, the registration of a new information source is described, but an existing information source may be deleted or its access route information may also be edited in operation 2404.

In confirmation of the information source, in operation 2405, a search for information is performed on the information source using the query extracted in operation 2402. The information search is performed on the information sources using a general keyword-based search mechanism or a semantic relevance-based search mechanism.

The search result is generated as an information item and a source item that indicates source information of the information item, and an information layer including the information item and the source item is generated to be displayed within a layer overlying the existing objects of the application interface in operation 2406. A plurality of information items of the search result are generated as well as a plurality of source items for the respective information items. In this case, there may be too many information items and source items to be displayed all together on the same information layer. Thus, for example, some information items and source items that have been generated earlier than the others may be selected and displayed first on the information layer.

Accordingly, the user in accordance with one configuration may choose to display another information or source item by performing a sliding touch gesture on the information or source item that is currently displayed on the information layer. Then, an information or source item selecting event may be received in operation 2407.

In response to receiving the information or source item selecting event, another information item or source item is selected from the search result of operation 2405 and the selected item is displayed on the information layer in operation 2408.

For example, when a user needs to look up a meaning of a particular word in a dictionary while writing a document, or to search for specific information from an email message, the user may double click a text input position with a mouse or double-tap on the text input position with the user's finger. In response to the click or touch input, the information search method is initiated so that the user can add an information source of interest and an information layer with an information item and source item obtained from the search result is displayed. The information layer overlays at a current text input position on the application interface with which the user is creating the document. Then, the user controls another information item to be displayed by inputting a slide touch on the information item currently presented on the information layer.

Thereafter, as the user inputs a touch input on a particular position of the application interface or the information layer, an information layer termination event is received in operation 2409 and accordingly, the information layer disappears.

As such, the information search method 2400 in accordance with one configuration allows relevant information of the information currently displayed on a screen to be automatically searched by a user's simple touch gesture, without requiring the user to leave the current screen, and allows the user to freely add an information source as a search target, be provided with the search result and the source of the search result on an additional layer, and choose the provided information to be changed and displayed.

The components illustrated in FIGS. 2, 5, 7, 8, 11, 16, and 17 that perform the operations described herein with respect to FIGS. 18-24 are implemented by hardware components. Examples of hardware components include controllers, sensors, generators, drivers, and any other electronic components known to one of ordinary skill in the art. In one example, the hardware components are implemented by one or more processors or computers. A processor or computer is implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices known to one of ordinary skill in the art that is capable of responding to and executing instructions in a defined manner to achieve a desired result. In one example, a processor or computer includes, or is connected to, one or more memories storing instructions or software that are executed by the processor or computer. Hardware components implemented by a processor or computer execute instructions or software, such as an operating system (OS) and one or more software applications that run on the OS, to perform the operations described herein with respect to FIGS. 18-24. The hardware components also access, manipulate, process, create, and store data in response to execution of the instructions or software. For simplicity, the singular term "processor" or "computer" may be used in the description of the examples described herein, but in other examples multiple processors or computers are used, or a processor or computer includes multiple processing elements, or multiple types of processing elements, or both. In one example, a hardware component includes multiple processors, and in another example, a hardware component includes a processor and a controller. A hardware component has any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 18-24 that perform the operations described herein with respect to FIGS. 2, 5, 7, 8, 11, 16, and 17 are performed by a processor or a computer as described above executing instructions or software to perform the operations described herein.

Instructions or software to control a processor or computer to implement the hardware components and perform the methods as described above are written as computer programs, code segments, instructions or any combination thereof, for individually or collectively instructing or configuring the processor or computer to operate as a machine or special-purpose computer to perform the operations performed by the hardware components and the methods as described above. In one example, the instructions or software include machine code that is directly executed by the processor or computer, such as machine code produced by a compiler. In another example, the instructions or software include higher-level code that is executed by the processor or computer using an interpreter. Programmers of ordinary skill in the art can readily write the instructions or software based on the block diagrams and the flow charts illustrated in the drawings and the corresponding descriptions in the specification, which disclose algorithms for performing the operations performed by the hardware components and the methods as described above.

The instructions or software to control a processor or computer to implement the hardware components and perform the methods as described above, and any associated data, data files, and data structures, are recorded, stored, or fixed in or on one or more non-transitory computer-readable storage media. Examples of a non-transitory computer-readable storage medium include read-only memory (ROM), random-access memory (RAM), flash memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, magnetic tapes, floppy disks, magneto-optical data storage devices, optical data storage devices, hard disks, solid-state disks, and any device known to one of ordinary skill in the art that is capable of storing the instructions or software and any associated data, data files, and data structures in a non-transitory manner and providing the instructions or software and any associated data, data files, and data structures to a processor or computer so that the processor or computer can execute the instructions. In one example, the instructions or software and any associated data, data files, and data structures are distributed over network-coupled computer systems so that the instructions and software and any associated data, data files, and data structures are stored, accessed, and executed in a distributed fashion by the processor or computer.

While this disclosure includes specific examples, it will be apparent to one of ordinary skill in the art that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner and/or replaced or supplemented by other components or their equivalents. Therefore, the scope of the disclosure is defined not by the detailed description, but by the claims.

## Claims

1. An information search method comprising:
receiving an event from an application interface, wherein the application interface is presented on a display of a computing device;
in response to receiving the event, extracting a query from content displayed within the application interface;
searching for information from an information source using the query; and
displaying an information layer within the application interface such that the information layer overlies existing objects on the application interface,
wherein the information layer comprises an information item which indicates information found by the searching for information.

2. The information search method of claim 1, wherein the information layer is translucent.

3. The information search method of claim 1 or 2, wherein the information layer further comprises a control that allows a user to control one of sizes, positions, shapes, translucency, and colors of the information layer and the information item, a source item that indicates source information of the information item, a control to execute an additional action related to the information item.

4. The information search method of claim 3, wherein the additional action related to the information item comprises an action for inputting the information item at a current cursor position within an object capable of inputting text, among the existing objects on the application interface.

5. The information search method of claim 3, wherein the additional action related to the information item comprises one of an action for displaying or disappearing a source item associated with the information item, and an action for displaying another information item that is found by the searching for information.

6. The information search method of claim 3, wherein the control to execute the additional action related to the information item is a user gesture or an object that is visibly represented on the information layer.

7. The information search method of one of claims 1 to 6, wherein the extracting of the query comprises extracting a part of the content displayed within the application interface as the query when a user chooses the part from the content displayed within the application interface.

8. The information search method of one of claims 1 to 7, wherein the extracting of the query comprises extracting an entire text as the query from the content displayed within the application interface.

9. The information search method of one of claim 1 to 8, wherein the information source comprises data contained in an application which provides the application interface for interaction with the user.

10. The information search method of one of claims 1 to 9, wherein the information source comprises data contained in an application within the computing device, other than an application that is provided by the application interface.

11. The information search method of one of claims 1 to 10, wherein the information source comprises data contained in a computing device that is connected with the computing device via a communication network.

12. The information search method of one of claims 1 to 11, wherein the information layer comprises a control to allow a user of the computing device to delete or change the information source, add a new information source or set a priority of the information source for searching the information.

13. The information search method of one of claims 1 to 12, wherein the information item is in form of a text.

14. An electronic apparatus comprising:
a user interface configured to receive a command and display content;
a query extractor configured to extract a query from the content displayed on the user interface in response to the user interface receiving the command;
a searching unit configured to perform a search of information related to the displayed content based on the extracted query and to generate the related information; and
an overlay display unit configured to generate an information layer comprising the related information and to display the information layer over the displayed content.

15. The apparatus of claim 14 adapted to operate according to one of claims 1 to 13.
